# EUROPEAN PATENT APPLICATION

(11) **EP 2 628 715 A2**
(43) Date of publication of application: **21.08.2013**
(21) Application number: 13460006.3
(22) Date of filing: 15.02.2013
(51) Int. Cl.: C04B 18/02

(54) **A method for high-temperature utilization of phosphogypsum**

(30) Priority: 17.02.2012 PL 39814812
(71) Applicant: LSA Sp. z.o.o., 15-124 Bialystok (PL)
(72) Inventor: Sokolowski, Janusz, 01-911 Warszawa (PL)
(74) Representative: Marcinska-Porzuc, Aleksandra

(57) **Abstract**

This invention relates to a method for high-temperature utilization of phosphogypsum wherein phosphogypsum or phosphogypsum along with power plant ashes in an amount from 2 to 75% per weight relative to the total dry mass of the materials, and a ground fuel are agglomerated and then the produced granulated material is sintered in a rotary furnace at a temperature 1000 - 1150°C, the agglomeration step being a wet process with water added to the mixture of dry raw materials and/or originating from wet raw materials.

## Description

This invention relates to a method for high-temperature utilization of phosphogypsum. The present utilization process is energy-saving and gives a transformation of phosphogypsum from a waste material into an inert granulated material having features of light weighted sintered aggregate similar to an ash-based porous material to be used mainly in road-building and building as replacements for natural aggregates.

The total volume of processing phosphorus-bearing raw materials and the production of phosphoric acid produces large amounts of waste, contaminated with calcium sulfate called phosphogypsum. Its neutralization and most profitable utilization have been a serious challenge for technology chemists for many years. Nowadays, about 85 million Mg (megagrams) of phosphogypsum is deposited in dumps, and every year additional 2 - 2.5 million Mg more is delivered. This illustrates the scale of the problem. The main limitation in utilizing phosphogypsum is the necessity of purifying it, particularly from fluorine compounds, heavy metals and radioelements, as well as drying it.

The amounts of phosphogypsum which are utilized today are merely few percent of phosphogypsum produced in the current production of the phosphoric acid. Therefore, every method allowing for utilizing phosphogypsum is desired, particularly if it promises a large volume of production. Today, phosphogypsum is used in agriculture, road-building, building, fertilizer industry, and for leveling mine excavations or land reclamation of devastated areas. There are few known methods for high-temperature utilization of phosphogypsum. They are based on the decomposition of calcium sulfate into calcium oxide and sulfur dioxide, and are used for production of Portland cement clinker and sulfuric acid, as well as production of building materials, including building gypsum. However, the development of those methods is hindered by high processing costs and therefore they are losing the competition with natural sulfur or natural gypsum.

More widely phosphogypsum is used in agriculture in the U.S.A for peanuts cultivation, and also in Spain and Brazil, because of the properties it gives to the soil [1]. Similarly, in the U.S.A the first attempts were made to use phosphogypsum in road building. It has been noticed that phosphogypsum is a good grain-adding component for mixtures of fine-grained and coarse-grained aggregates and it may be used in such a mixture as a road foundation for asphaltic concrete pavements.

Another direction is using phosphogypsum along with ash and cement as a hydraulic mixture for building low traffic road pavements [2]. In Finland, in the years 1998 - 2002, granulated blast furnace slag was added to the mixture. A road has been built, the performance properties of which did not change in spite of different traffic levels. Additionally, it has been noticed that the highest load capacity was exhibited by the segment built from phosphogypsum and blast furnace slag [3].

In Poland, as main methods for utilizing phosphogypsum is producing binders, building materials and fillers, which was presented for example in the patent PL147599 disclosing a method for producing building phosphogypsum-based materials. Most often phosphogypsum was thermally treated while producing anhydrite, which was discontinued because of significant energy consumption of the process [4]. Exemplary investigations of using phosphogypsum in road building were related to producing phosphogypsum composite materials with water-glass with an addition of fly ash, sand, and carbide residue, as was carried out in the Gdansk University of Technology [5], or were related to roasting phosphogypsum along with burnt lime, barium chloride or ferric sulfate at a temperature of 180 - 230 °C, as carried out in the Road and Bridge Research Institute in Warsaw [6].

Among other patent documents related to said field, one can mention patents PL163643 and PL186189 which propose obtaining a binder and a filler for paints, enamels and synthetic resins from phosphogypsum, and also PL191946, according to which the composite is to be used in building, road building and mining.

Basing on the researches carried out in the years 2007 - 2009 in the Institute of Inorganic Chemistry and the Road and Bridge Research Institute in Warsaw, high potential possibilities of using phosphogypsum-ash mixtures in the road building have been shown.

Many of the works on utilizing phosphogypsum have been continuing for over 30 years, and even then phosphogypsum dumping dominates. Therefore, a continuous demand exists for improved methods for utilizing phosphogypsum.

The subject matter of the present invention is a method for high-temperature utilization of phosphogypsum wherein phosphogypsum or phosphogypsum along with power plant ashes in an amount from 2 to 75% per weight relative to the total dry mass of the materials, and a ground fuel are agglomerated and then the produced granulated material is sintered in a rotary furnace at a temperature preferably 1000 - 1150°C, the agglomeration step being a wet process with water added to the mixture of dry raw materials and/or originating from wet raw materials.

The fuel is coal or coal with an addition of fuels selected from a group including biomass, wood waste, after-fermentation sediments from wastewater treatment plants. The fuel energetic value is not less than 2.35 kJ/kg of phosphogypsum or mixture of phosphogypsum with ash.

The water content in the mixture of the agglomerated materials is preferably from 10 to 25% by weight.

According to the described method, the rotary furnace works in a co-current arrangement for the motion of the batch and the gaseous phase. Sintering in the furnace is carried out at a temperature of at least 1080°C for a weight ratio of phosphogypsum to the ashes equal to 1:1 and at a temperature not less than 1000°C for a weight ratio of phosphogypsum to the ashes equal to 1:3.

The utilized material is phosphogypsum as well as phosphogypsum with an addition of ashes from power plants, said materials constituting from 2 up to 75% by weight of dry mass. In both cases the material is utilized in a mixture with ground fuel. The fuel may be ground coal or coal in a mixture containing up to 50% of alternative fuels like biomass, after-fermentation sediments from wastewater treatment plants, and other organic waste material at a sufficient energetic demand of 2.35 kJ/kg of phosphogypsum or phosphogypsum/ash mixture. The used fuels are also waste materials subject to utilization, i.e., they may be industrial organic waste materials of any type used for producing solid biofuels, e.g., wood industry, organic plant pomace, straw etc.

In a method according to this invention, dry or wet mixtures are utilized, the moisture content of which is not higher than 20% by weight. The materials are agglomerated with an addition of water, and the obtained granulated material is burnt and sintered in a co-current rotary furnace having very high ratio of filling the furnace shaft with the batch and radial feeding of the air (via the walls of the drum), for example in a furnace according to PL196842.

In a method according to the invention, the materials may be agglomerated by any technique known to the skilled in the art. For example, the agglomeration may be carried out by granulation. During the step of agglomeration the materials may be exactly mixed, making a uniform, multicomponent raw material or they may exhibit some nonuniformity, e.g., particles of wet fuel may be surrounded by particles of dry ashes or a mixture of phosphogypsum and ashes. Also, it is possible to create multilayered granules, for example by coating the granules with wet fuel particles and dry components alternately and repeatedly.

In a method according to the invention the process, of sintering the phosphogypsum granulate is carried out at temperatures 1080 - 1150°C, and while adding the power plant ashes into phosphogypsum one can lower the sintering temperature down to 1000°C at a weight ratio of phosphogypsum to ashes equal to 1:3.

From the point of view of the quality of the obtained aggregate, it is advantageous to use even a small addition of power plant ashes, however one can process phosphogypsum alone with an addition of coal (being a source of energy) and the results will be satisfactory. The addition of power plant ashes lowers, to some extent, the temperature of sintering the agglomerate and increases the quantity of amorphous phase, this being advantageous in terms of binding the heavy metals contaminants within the agglomerate.

In a method according to the invention, in the above mentioned process conditions the level of the anhydrite decomposition is low, whereby the emission of the sulfur dioxide and nitrogen oxides into the atmosphere does not exceed the permissible levels, and the fluorides contained in the phosphogypsum function as a fusing agent leading to a permanent capture of fluorine and possible heavy metals ions within the sintered granulated material. The only factor limiting the use thereof may be the content of radioelements in different batches of the aggregate, particularly when intended for the use in spaces in which people or domestic animals are to stay permanently.

The method according to the invention is explained in more detail in the following examples, which are only some of the many possible methods according to the invention.

### Example 1

Prepare a mixture of 920 kg of dry phosphogypsum with 80 kg of dry ground coal and granulate it with an addition of about 240 I of water, reaching the humidity of the raw granulate of 24 - 25%. Then, after drying it, burn and sinter it in a rotary furnace of the patent RP196842, obtaining the granulated product in the final section of the furnace at a temperature of about 1100°C.

### Example 2

Prepare a mixture of 540.5 kg of phosphogypsum of a humidity of 15% with 15 kg of dry ground coal and 38.9 kg of after-fermentation sediments from wastewater treatment plants of a humidity of 20% and 560 kg of power plant ash of a humidity of 12% containing 10% by weight of coal, on the basis of the dry mass of the ash, and granulate it with an addition of about 102,5 I of water. Then, burn and sinter the dried granulate in a rotary furnace as above at a temperature of about 1080°C.

Literature:
1. Hilton J., Phosphogypsum Management and Opportunities for Use, International Fertiliser Society, Cambridge 2006, No 587.
2. Phosphorus & Potassium, No 215, 1998, 35.
3. Disposal Management System for Utilization of Industrial Phosphogypsum and Fly Ash, Project No: LIFE98ENV/FIN/000566.
4. Dankowski M., Warstwy, dachy, sciany (Layers, roofs, walls), No 3, 2001, 59-61.
5. Quant B., II Kongres Inżynierii Środowiska (2nd Environmental Engineering Congress), Monografie Komitetu Inżynierii Środowiska (Monographs of the Environmental Engineering Committee) PAN, vol.32, 2005
6. Przygoda M., Kraszewski C., Rafalski L., V Miedzynarodowa Konferencja "Trwale i Bezpieczne Nawierzchnie Drogowe" (5th International Conference 'Durable and safe road pavements'), Kielce 1999.

## Claims

1. A method for high-temperature utilization of phosphogypsum, **characterized in that** phosphogypsum or phosphogypsum and power plant ashes in an amount from 2 to 75% by weight relative to the total dry mass of the raw materials and ground fuel are agglomerated and the obtained granulated material is burnt and sintered in a rotary furnace at a temperature in the range of 1000 - 1150°C, the agglomeration step being a wet process with water added to the mixture of dry raw materials and/or originating from wet raw materials.

2. The method according to claim 2, **characterized in that** the fuel is coal or coal with an addition of fuels selected from a group including biomass, wood waste, after-fermentation sediments from wastewater treatment plants and other organic waste material.

3. The method according to claim 2 **characterized in that** the used fuel has energetic value not less than 2.35 kJ/kg of phosphogypsum or mixture of phosphogypsum with ash.

4. The method according to claim 1 or 2 or 3, **characterized in that** the water content in the mixture of the agglomerated materials is preferably from 10 to 25% by weight.

5. The method according to claim 1 or 2 or 3 or 4, **characterized in that** the rotary furnace works in a co-current arrangement for the motion of the batch and the gaseous phase.

6. The method according to claim 1 or 2 or 3 or 4 or 5, **characterized in that** the sintering process is carried out at a temperature of at least 1080°C for a weight ratio of phosphogypsum to the ashes equal to 1:1 and at a temperature not less than 1000°C for a weight ratio of phosphogypsum to the ashes equal to 1:3.
